# EUROPEAN PATENT APPLICATION

(11) **EP 4 346 002 A1**
(43) Date of publication of application: **03.04.2024**
(21) Application number: 22865112.1
(22) Date of filing: 02.09.2022
(51) Int. Cl.: H01M 50/503, H01M 50/516, H01M 50/213, H01M 50/249

(54) **CYLINDRICAL SECONDARY BATTERY MODULE, AND SECONDARY BATTERY PACK AND VEHICLE COMPRISING SAME**

(30) Priority: 03.09.2021 KR 20210117933
(71) Applicant: LG Energy Solution, Ltd., Seoul 07335 (KR)
(72) Inventor: SON, Min-Su, Daejeon 34122 (KR); CHO, Jun-Beom, Daejeon 34122 (KR)
(74) Representative: Plasseraud IP
(86) International application number: PCT/KR2022/013232
(87) International publication number: WO 2023/033610

(57) **Abstract**

Disclosed are a cylindrical secondary battery module, and a secondary battery pack and a vehicle including the same. A cylindrical secondary battery module according to an embodiment of the present disclosure includes a plurality of cylindrical secondary battery cells in which an electrode assembly and an electrolyte are accommodated; a cell frame in which the plurality of cylindrical secondary battery cells are disposed; and a bus bar coupled to each of a plurality of cylindrical secondary battery cells and having a plurality of welding portions formed thereon, wherein among the plurality of welding portions, the welding portions spaced apart at larger intervals are welded to each other.

## Description

### TECHNICAL FIELD

The present application claims priority to Korean Patent Application No. 10-2021-0117933 filed on September 3, 2021 in the Republic of Korea, the disclosures of which are incorporated herein by reference.

The present disclosure relates to a cylindrical secondary battery module, and a secondary battery pack and a vehicle including the same, and more specifically, to a cylindrical secondary battery module capable of securing durability even in high-temperature vibration by improving welding quality, and a secondary battery pack and a vehicle including the same.

### BACKGROUND ART

As the technology development and demand for mobile devices increase, demand for secondary batteries as an energy source is rapidly increasing, and nickel cadmium batteries or hydrogen-ion batteries have been used as conventional secondary batteries, but recently, lithium secondary batteries that have almost no memory effect compared to nickel-based secondary batteries, thereby having advantages of free charge/discharge, very low self-discharge rate, and high energy density, are widely used.

These lithium secondary batteries mainly use a lithium-based oxide and a carbon material as a positive electrode active material and a negative electrode active material, respectively. A lithium secondary battery includes a secondary battery cell in which a positive electrode plate and a negative electrode plate coated with the positive electrode active material and the negative electrode active material, respectively, are disposed with a separator therebetween, and an exterior material that seals and accommodates the secondary battery cell together with an electrolyte, that is, a battery case.

A lithium secondary battery is composed of a positive electrode, a negative electrode, a separator interposed therebetween and an electrolyte, and is classified into a lithium-ion battery (LIB), a polymer lithium-ion battery (PLIB), and the like depending on which positive electrode active material and negative electrode active material are used. Typically, electrodes of these lithium secondary batteries are formed by coating a positive electrode or negative electrode active material on a current collector, such as an aluminum or copper sheet, mesh, film, foil, or the like, and then drying the same.

In general, a secondary battery may be classified into a cylindrical type, a prismatic type, or a pouch type depending on the shape of an exterior material in which secondary battery cells are accommodated, and a cylindrical secondary battery may be used in the form of a secondary battery module by connecting a plurality of secondary battery cells in series or in parallel.

In the cylindrical secondary battery, a bus bar is coupled to each of the secondary battery cells by welding, and resistance welding is commonly used to minimize deformation of an electrode terminal of the secondary battery cell.

Resistance welding is a welding method in which the bus bar and the electrode terminal are bonded by partially melting the bus bar with heat generated by the resistance by flowing current while pressing the bus bar and the electrode terminal with a welding rod.

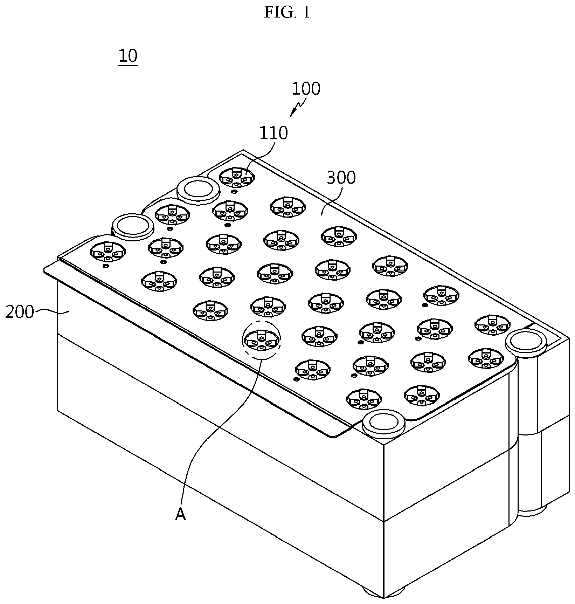

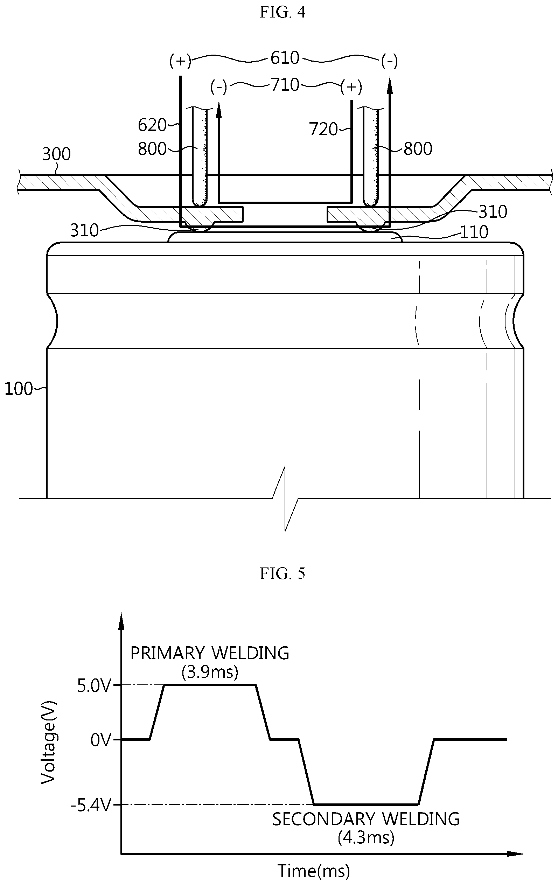

Here, resistance welding includes a 2-point welding method of FIG. 1 and a 4-point welding method of FIG. 4, as described in Prior Art Document Korean Publication No. 10-2021-0054790.

However, the 2-point welding method has a problem in that the welding portion of the bus bar easily breaks under high temperature conditions such as charging and discharging of a secondary battery or under vibration conditions such as driving a vehicle.

In addition, the conventional 4-point welding method is to weld two points located close to each other, respectively, and compared to the 2-point welding method, the reactive current increases, thereby causing problems of not only flying on the surface of the base material, but also uneven growth of the welding nugget, which melts and hardens the surface after welding.

Specifically, when the welding points of the bus bars are close to each other, the current flows to the peripheral surface of the bus bar with relatively low resistance and does not contribute to welding, and such a current that does not contribute to welding is called a reactive current.

If the reactive current increases during resistance welding, there is a problem that the welding quality deteriorates and easily falls off, and thus a method for reducing the reactive current is required.

### DISCLOSURE

### Technical Problem

The present disclosure is designed to solve the problems of the related art, and therefore the present disclosure is directed to providing a cylindrical secondary battery module that improves welding quality by reducing reactive current and prevents the bus bar from being damaged by high-temperature vibration or impact, and a secondary battery pack and a vehicle including the same.

### Technical Solution

According to one aspect of the present disclosure, there may be provided a cylindrical secondary battery module including a plurality of cylindrical secondary battery cells in which an electrode assembly and an electrolyte are accommodated; a cell frame in which the plurality of cylindrical secondary battery cells are disposed; and a bus bar coupled to each of a plurality of cylindrical secondary battery cells and having a plurality of welding portions formed thereon, wherein among the plurality of welding portions, the welding portions spaced apart at larger intervals are welded to each other.

In addition, four welding portions are formed on the bus bar, wherein among the four welding portions, a first welding portion and a third welding portion located on a straight line in a first diagonal direction may be welded to each other, and among the four welding portions, a second welding portion and a fourth welding portion located on a straight line in a second diagonal direction may be welded to each other.

Also, a straight line in the first diagonal direction, which is a straight line connecting the first welding portion and the third welding portion, and a straight line in the second diagonal direction, which is a straight line connecting the second welding portion and the fourth welding portion may be orthogonal to each other.

In addition, in the welding of the welding portions, the primary welding may be performed by applying a first voltage in an arbitrary first direction, and then the secondary welding may be performed by applying a second voltage in a second direction opposite to the first direction.

Also, the first voltage and the second voltage may be different in magnitude.

In addition, the magnitude of the second voltage for the secondary welding may be greater than the magnitude of the first voltage for the primary welding.

Also, the first voltage and the second voltage may have different supply times.

In addition, the supply time of the second voltage for the secondary welding may be longer than the supply time of the first voltage for the primary welding.

Also, the welding portion may be provided as a protrusion formed on the bus bar.

Meanwhile, according to another aspect of the present disclosure, there may be provided a secondary battery pack including the above-described cylindrical secondary battery module, and there may also be provided a vehicle including the cylindrical secondary battery module.

### Advantageous Effects

According to embodiments of the present disclosure, the gap between the welding portions is increased to reduce the reactive current, thereby improving welding quality and preventing the bus bar from being damaged by high-temperature vibration or impact.

### DESCRIPTION OF DRAWINGS

FIG. 1 is a schematic perspective view of a cylindrical secondary battery module according to an embodiment of the present disclosure.
FIG. 2 is an exploded perspective view of FIG. 1.
FIG. 3 is an enlarged view of part A in FIG. 1.
FIG. 4 is a view schematically showing a welding method of a secondary battery cell and a bus bar in a cylindrical secondary battery module according to an embodiment of the present disclosure.
FIG. 5 is a diagram schematically showing a graph according to the welding method of FIG. 4.
FIG. 6 is a diagram showing an actual experimental graph according to the welding method of FIG. 4.
FIG. 7 is a diagram showing result data according to the experiment of FIG. 6.
FIG. 8 is a diagram showing a comparative experimental graph with FIG. 6.
FIG. 9 is a diagram showing result data according to the experiment of FIG. 8.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

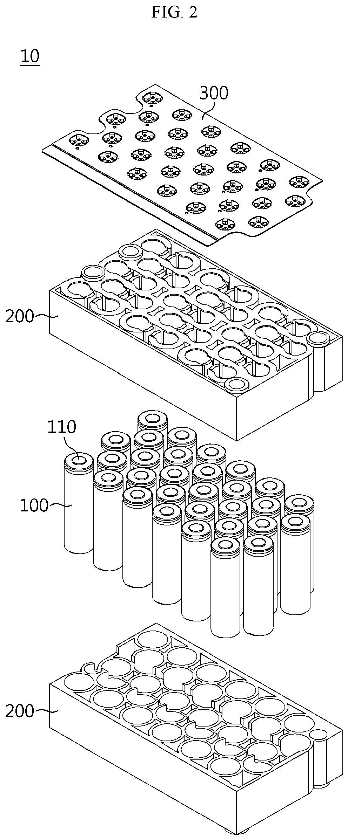

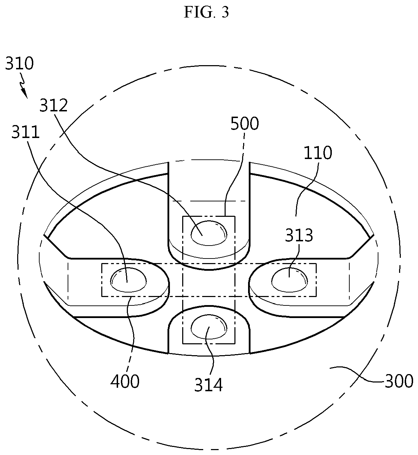

FIG. 1 is a schematic perspective view of a cylindrical secondary battery module according to an embodiment of the present disclosure, FIG. 2 is an exploded perspective view of FIG. 1, FIG. 3 is an enlarged view of part A in FIG. 1, FIG. 4 is a view schematically showing a welding method of a secondary battery cell and a bus bar in a cylindrical secondary battery module according to an embodiment of the present disclosure, and FIG. 5 is a diagram schematically showing a graph according to the welding method of FIG. 4.

Referring to the drawings, a cylindrical secondary battery module 10 according to an embodiment of the present disclosure includes a plurality of cylindrical secondary battery cells 100, a cell frame 200, and a bus bar 300.

The cylindrical secondary battery cell 100 includes an electrode assembly, for example, a jelly-roll type electrode assembly, a cylindrical battery case in which an electrolyte is accommodated together with the electrode assembly, and an electrode terminal 110 formed in the battery case, for example, a positive electrode terminal formed on an upper portion of the battery case and a negative electrode terminal formed on a lower portion of the battery case.

The electrode assembly may have a structure in which a separator is interposed between a positive electrode and a negative electrode and wound in a jelly-roll shape, wherein a positive electrode lead is attached to the positive electrode and connected to, for example, an upper positive electrode terminal of the battery case, and a negative electrode lead is attached to the negative electrode and connected to, for example, a lower negative electrode terminal of the battery case.

In addition, a cylindrical center pin may be inserted into the center of the electrode assembly. The center pin may function as a passage for fixing and supporting the electrode assembly and discharging gas generated by an internal reaction during charge/discharge and operation.

Here, inside the battery case, for example, at a lower portion of the top cap, a safety vent for discharging gas by being ruptured due to an increase in pressure inside the battery case may be provided.

The plurality of cylindrical secondary battery cells 100 may be connected in series or in parallel in various ways to be used. For example, the bus bar 300 may be connected to each of the positive electrode and negative electrode terminals of the cylindrical secondary battery cell 100 to be connected in series or in parallel.

The cell frame 200 is formed of various shapes and materials so that the plurality of cylindrical secondary battery cells 100 are respectively disposed. The cell frame 200 may be made of a metal material to maintain a predetermined rigidity, but is not limited thereto.

The bus bar 300 is coupled to each of the plurality of cylindrical secondary battery cells 100. The bus bar 300 may be made of various materials that conduct electricity, for example, copper or various types of copper alloys. For example, the bus bar 300 may be made of a tin-plated copper alloy, but the material is not limited thereto.

Referring to FIG. 3, a plurality of welding portions 310 are formed on the bus bar 300. Here, the welding portion 310 may be provided as a protrusion formed to protrude from the bus bar 300. Also, the plurality of welding portions 310 may be coupled to the cylindrical secondary battery cell 100, for example, by resistance welding. Here, among the plurality of welding portions 310, the welding portions 310 spaced apart at larger intervals are provided to be welded to each other.

Referring to FIGS. 1 to 3 as an example, four welding portions 310 may be formed on the bus bar 300. However, the number of the plurality of welding portions 310 is not limited to four.

In addition, a first welding portion 311 and a third welding portion 313 located on a straight line 400 in the first diagonal direction among the four welding portions 310 are welded to each other so that the welding portions 310 spaced apart at larger intervals among the four welding portions 310 may be welded to each other.

Also, among the four welding portions 310, a second welding portion 312 and a fourth welding portion 314 located on a straight line 500 in the second diagonal direction are welded to each other. Here, if the four welding portions 310 are connected in a straight line, the four welding portions 310 may be disposed so that a square shape is drawn. Alternatively, the four welding portions 310 may also be disposed so that a rectangular shape or a rhombus shape is drawn by connecting the four welding portions in a straight line.

That is, referring to FIG. 3, the first welding portion 311 is welded to the third welding portion 313 located diagonally farthest from the first welding portion 311, and the second welding portion 312 is welded to the fourth welding portion 314 located diagonally farthest from the second welding portion 312.

In this way, when welding portions 310 spaced apart at larger intervals among the four welding portions 310, that is, welding portions 310 farthest away from each other, are welded together, the reactive current decreases.

In addition, the active current contributing to welding relatively increases as much as the reactive current among the current supplied for welding decreases, thereby improving welding quality and preventing damage to the welded area.

Meanwhile, a first diagonal straight line 400, which is a straight line connecting the first welding portion 311 and the third welding portion 313, and a second diagonal straight line 500, which is a straight line connecting the second welding portion 312 and the fourth welding portion 314 may be provided to be orthogonal to each other.

In this way, when the first diagonal straight line 400 and the second diagonal straight line 500 are provided to be orthogonal to each other, the distance between the four welding portions 310 is balanced, whereby uniform welding is possible.

Referring to FIG. 4, welding is performed while the welding portion 310 of the bus bar 300 and the electrode terminal 110 are pressed by the welding rod 800, and at this time, the welding of the welding portions 310 is provided such that the primary welding is performed by applying a first voltage 610 in an arbitrary first direction, and then the secondary welding is performed by applying a second voltage 710 in a second direction opposite to the first direction.

For example, the primary welding is performed while the first voltage 610 is applied with a + pole on the left side and a - pole on the right side based on FIG. 4, and the first current 620 flows in the first direction, that is, from the left to the right in FIG. 4.

In addition, after the primary welding, the secondary welding is performed. The secondary welding is performed while the second voltage 710 is applied with a + pole on the right side and a - pole on the left side based on FIG. 4, and the second current 720 flows in the second direction, that is, from the right to the left in FIG. 4.

As described above, in the cylindrical secondary battery module 10 according to an embodiment of the present disclosure, the polarity of the voltage is reversed after the primary welding, and then the secondary welding is performed, resulting in achieving balanced bonding over the entire welding portion 310 by such a polarity switching type welding.

Meanwhile, in the above-described polarity switching type welding, the first voltage 610 of the primary welding and the second voltage 710 of the secondary welding in which the polarity is reversed from the first voltage 610 may be provided to be different in magnitude. For example, the magnitude of the second voltage 710 for the secondary welding may be greater than the magnitude of the first voltage 610 for the primary welding.

Referring to FIG. 5 as an embodiment related to voltage, the absolute magnitude of the first voltage 610 for the primary welding is 5.0 volts, but the absolute magnitude of the second voltage 710 for the secondary welding is 5.4 volts. In FIG. 5, the volt is indicated by V.

If welding is performed at a high voltage from the primary welding portion 310 in a state where bus bar 300 and the electrode terminal 110 are not welded, the welding surface may be peeled off and the welding may become unstable.

In order to solve this problem, the primary welding is performed at a relatively lower voltage than the secondary welding. In addition, when a certain degree of bonding is made between the bus bar 300 and the electrode terminal 110 by the primary welding, welding may be stably performed without peeling off the welding surface even if a voltage higher than that of the primary welding is used in the secondary welding.

That is, as described above, when the magnitude of the second voltage 710 for the secondary welding is larger than the magnitude of the first voltage 610 for the primary welding, the welding surface may be prevented from being peeled off and the welding may be performed stably.

However, the magnitude of the voltage in FIG. 5 is in one embodiment and not limited to the magnitude of the voltage. Also, in FIG. 5, the secondary welding is indicated as -5.4 volts, which means that the voltage is applied in the opposite direction to the primary welding.

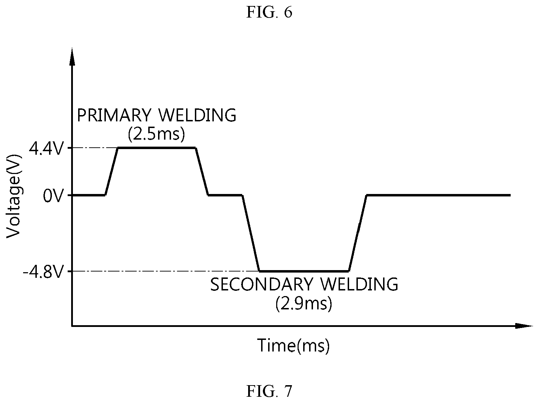

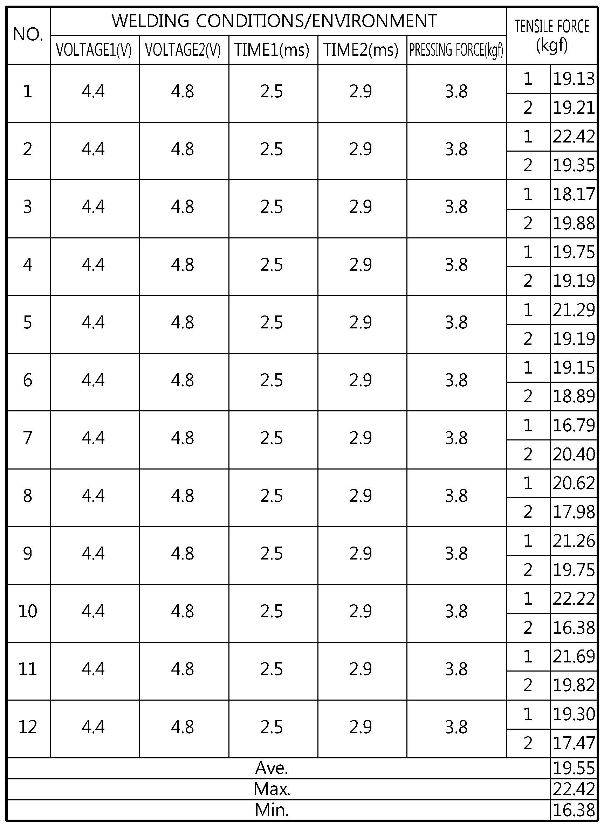

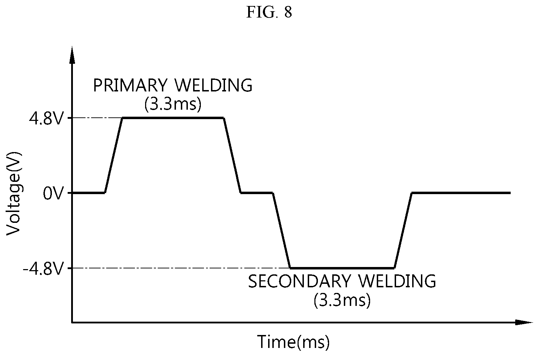

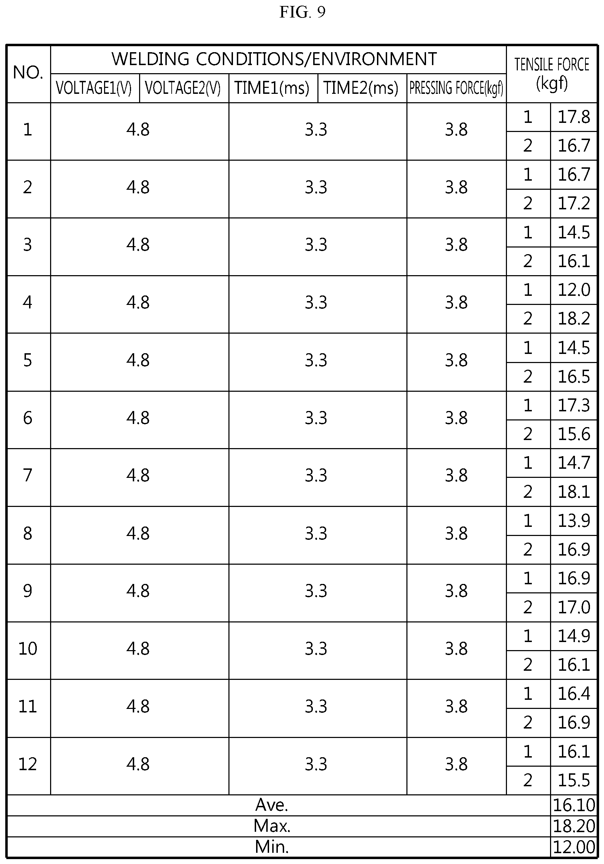

FIG. 6 is a diagram showing an actual experimental graph according to the welding method of FIG. 4, FIG. 7 is a diagram showing result data according to the experiment of FIG. 6, FIG. 8 is a diagram showing a comparative experimental graph with FIG. 6, and FIG. 9 is a diagram showing result data according to the experiment of FIG. 8.

Referring to FIG. 6, in an actual experiment, the absolute magnitude of the first voltage 610 for the primary welding is 4.4 volts, the absolute magnitude of the second voltage 710 for the secondary welding is 4.8 volts, and the absolute magnitude of the first voltage 610 and the absolute magnitude of the second voltage 710 are different. In FIG. 6, as in FIG. 5, the volt is indicated by V.

Referring to FIG. 7, which is the result data of the actual experiment of FIG. 6, when the pressing force is 3.8 kgf, the maximum value of the tensile force is 22.42 kgf, the minimum value is 16.38 kgf, and the average value is 19.55 kgf. Here, the pressing force is a force applied to the welding portion during welding, and the tensile force is a force required to pull to separate the welding portion after welding is completed. The high tensile force means that the bonding force of the welded area is high, and thus the mechanical properties of the welding portion are improved. Here, the tensile force is a value measured through a mechanical test after completion of welding, for example, a test of mechanically tearing off the welding portion.

Referring to FIG. 8, in an actual experiment, the absolute magnitude of the first voltage 610 for the primary welding and the absolute magnitude of the second voltage 710 for the secondary welding are the same as 4.8 volts. In FIG. 8, as in FIG. 5, the volt is indicated by V.

Referring to FIG. 9, which is the result data of the actual experiment of FIG. 8, when the pressing force is 3.8 kgf, the maximum value of the tensile force is 18.20 kgf, the minimum value is 12 kgf, and the average value is 16.1 kgf.

When comparing FIGS. 7 and 9, it may be seen that the tensile force is higher in the case where the absolute magnitudes of the first voltage 610 and the second voltage 710 are different from each other than in the case where the absolute magnitudes of the first voltage 610 and the second voltage 710 are the same. That is, when the absolute magnitudes of the first voltage 610 and the second voltage 710 are different from each other, especially when the absolute magnitude of the second voltage 710 is greater than the absolute magnitude of the first voltage 610, it may be seen that the mechanical properties of the welding portion are improved.

Also, in the above-described polarity switching type welding, the supply time of the first voltage 610 of the primary welding and the supply time of the second voltage 710 of the secondary welding in which the polarity is reversed from the first voltage 610 may be provided to be different from each other. For example, the supply time of the second voltage 710 for the secondary welding may be longer than the supply time of the first voltage 610 for the primary welding. This is for the same reason as described in the magnitude difference between the first voltage 610 and the second voltage 710 above.

Referring to FIG. 5 as an embodiment related to the supply time, the supply time of the first voltage 610 for the primary welding is 3.9 milliseconds, but the supply time of the second voltage 710 for the secondary welding is 4.3 milliseconds. In Fig. 5, the milliseconds are indicated by ms.

If welding is performed for a long time at a preset voltage from the primary welding portion 310 in a state where the bus bar 300 and the electrode terminal 110 are not welded, the welding surface may be peeled off and the welding may become unstable.

In order to solve this problem, the primary welding is performed for a relatively shorter time than the secondary welding. In addition, when a certain degree of bonding is made by the primary welding, welding may be stably performed without peeling off the welding surface even if the voltage is used for a longer time than the primary welding in the secondary welding.

That is, as described above, when the supply time of the second voltage 710 for the secondary welding is longer than the supply time of the first voltage 610 for the primary welding, the welding surface may be prevented from being peeled off and the welding may be performed stably.

However, the supply time of the voltage in FIG. 5 is in one embodiment and not limited to the supply time of the voltage.

Meanwhile, referring to FIG. 6, in an actual experiment, the supply time of the first voltage 610 for the primary welding is 2.5 milliseconds, but the supply time of the second voltage 710 for the secondary welding is 2.9 milliseconds. In FIG. 6, as in FIG. 5, the milliseconds are indicated by ms.

In addition, referring to FIG. 8, in an actual experiment, the supply time of the first voltage 610 for the primary welding and the supply time of the second voltage 710 for the secondary welding are the same as 3.3 milliseconds. In FIG. 8, as in FIG. 5, the milliseconds are indicated by ms.

When comparing FIGS. 7 and 9, it may be seen that the tensile force is higher in the case where the supply times of the first voltage 610 and the second voltage 710 are different from each other than in the case where the supply times of the first voltage 610 and the second voltage 710 are the same. That is, when the supply times of the first voltage 610 and the second voltage 710 are different from each other, especially, when the supply time of the second voltage 710 is longer than the supply time of the first voltage 610, it may be seen that the mechanical properties of the welding portion are improved.

Hereinafter, an operation and an effect of the cylindrical secondary battery module 10 according to an embodiment of the present disclosure will be described with reference to the drawings.

Referring to the drawings, the welding portion 310 provided as a protrusion is formed on the bus bar 300. Here, four welding portions 310 may be formed on the bus bar 300, and each of the four welding portions 310 may be welded to another welding portion, which is positioned on a straight line in a diagonal direction. For example, the first welding portion 311 and the third welding portion 313 may be welded, and the second welding portion 312 and the fourth welding portion 314 may be welded.

In this way, when the welding portions 310 farthest away from each other are welded, the reactive current is reduced and the welding quality is improved, thereby preventing damage to the welded area.

Also, when the two welding portions 310 among the four are welded together, the primary welding is performed so that the current flows in an arbitrary direction, and then the secondary welding may be performed while the polarity of the voltage is reversed so that the current flows in a direction opposite to the arbitrary direction.

By such a polarity switching type welding, balanced bonding may be achieved over the entire welding portion 310.

Meanwhile, in the polarity switching type welding, the first voltage 610 of the primary welding and the second voltage 710 of the secondary welding in which the polarity is reversed from the first voltage 610 may be provided to be different in magnitude, for example, the magnitude of the second voltage 710 for the secondary welding may be greater than the magnitude of the first voltage 610 for the primary welding.

In addition, in the polarity switching type welding, the supply time of the first voltage 610 of the primary welding and the supply time of the second voltage 710 of the secondary welding in which the polarity is reversed from the first voltage 610 may be provided to be different, for example, the supply time of the second voltage 710 for the secondary welding may be longer than the supply time of the first voltage 610 for the primary welding.

Accordingly, when the bus bar 300 is welded to the cylindrical secondary battery cell 100, there is an effect that the welding surface is prevented from being blown and the welding may be performed stably.

Meanwhile, a secondary battery pack (not shown) according to an embodiment of the present disclosure may include one or more cylindrical secondary battery modules 10 according to an embodiment of the present disclosure as described above. Also, the secondary battery pack (not shown) may further include, in addition to the secondary battery module, a housing for accommodating the secondary battery module and various devices for controlling charge/discharge of the secondary battery module, such as a BMS, a current sensor, a fuse, and the like.

Meanwhile, a vehicle (not shown) according to an embodiment of the present disclosure may include the above-described cylindrical secondary battery module 10 or a secondary battery pack (not shown), and the cylindrical secondary battery module 10 may be included in the secondary battery pack (not shown).

In addition, the cylindrical secondary battery module 10 or the secondary battery pack (not shown) according to an embodiment of the present disclosure may be applied to the vehicle (not shown), for example, a predetermined vehicle (not shown) provided to use electricity, such as an electric vehicle or a hybrid vehicle.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

### INDUSTRIAL APPLICABILITY

The present disclosure relates to a cylindrical secondary battery module, and a secondary battery pack and a vehicle including the same, and is particularly applicable to industries related to secondary batteries.

## Claims

1. A cylindrical secondary battery module comprising:
a plurality of cylindrical secondary battery cells in which an electrode assembly and an electrolyte are accommodated;
a cell frame in which the plurality of cylindrical secondary battery cells are disposed; and
a bus bar coupled to each of a plurality of cylindrical secondary battery cells and having a plurality of welding portions formed thereon,
wherein among the plurality of welding portions, the welding portions spaced apart at larger intervals are welded to each other.

2. The cylindrical secondary battery module according to claim 1,
wherein four welding portions are formed on the bus bar,
wherein among the four welding portions, a first welding portion and a third welding portion located on a straight line in a first diagonal direction are welded to each other, and
among the four welding portions, a second welding portion and a fourth welding portion located on a straight line in a second diagonal direction are welded to each other.

3. The cylindrical secondary battery module according to claim 2,
wherein a straight line in the first diagonal direction, which is a straight line connecting the first welding portion and the third welding portion, and a straight line in the second diagonal direction, which is a straight line connecting the second welding portion and the fourth welding portion are to be orthogonal to each other.

4. The cylindrical secondary battery module according to claim 1,
wherein in the welding of the welding portions, the primary welding is performed by applying a first voltage in an arbitrary first direction, and then the secondary welding is performed by applying a second voltage in a second direction opposite to the first direction.

5. The cylindrical secondary battery module according to claim 4,
wherein the first voltage and the second voltage are different in magnitude.

6. The cylindrical secondary battery module according to claim 5,
wherein the magnitude of the second voltage for the secondary welding is greater than the magnitude of the first voltage for the primary welding.

7. The cylindrical secondary battery module according to claim 4,
wherein the first voltage and the second voltage have different supply times.

8. The cylindrical secondary battery module according to claim 7,
wherein the supply time of the second voltage for the secondary welding is longer than the supply time of the first voltage for the primary welding.

9. The cylindrical secondary battery module according to claim 1,
wherein the welding portion is provided as a protrusion formed on the bus bar.

10. A secondary battery pack comprising the cylindrical secondary battery module according to any one of claims 1 to 9.

11. A vehicle comprising the cylindrical secondary battery module according to any one of claims 1 to 9.
